# EUROPEAN PATENT SPECIFICATION

(11) **EP 0 727 571 B1**
(45) Date of publication and mention of the grant of the patent: **16.12.1998**
(21) Application number: 96301009.5
(22) Date of filing: 14.02.1996
(51) Int. Cl.: F02B 23/06, F02B 7/06

(54) **Arrangement for effectivating the burning process in a reciprocating internal combustion engine**
Vorrichtung zur Verbesserung des Verbrennungsvorganges in einer Hubkolbenbrennkraftmaschine
Dispositif pour l'amélioration de la combustion dans un moteur à combustion interne à piston alternatif

(30) Priority: 15.02.1995 FI 950678
(43) Date of publication of application: 21.08.1996
(73) Proprietor: Wärtsilä NSD OY AB, 00530 Helsinki (FI)
(72) Inventor: Nylund, Ingemar, 66580 Kuni (FI)
(74) Representative: Manaton, Ross Timothy

(56) References cited:
- DE-A- 3 706 592
- GB-A- 689 585
- US-A- 2 172 170
- US-A- 2 555 818
- PATENT ABSTRACTS OF JAPAN vol. 11, no. 57 (M-564), 21 February 1987 & JP-A-61 218715 (YANMAR DIESEL ENGINE CO), 29 September 1986,

## Description

The invention relates to an arrangement for effectivating (i.e,. enhancing the efficiency of) the burning process in a reciprocating internal combustion engine, especially in a gas engine according to the preamble of claim 1.

In this specification the term "gas engine" refers to a combustion engine in which the basic fuel used is a gaseous fuel, for example natural gas. When the engine operates on the Otto principle and the basic fuel mixture in the cylinder is lean, the engine is known as a so-called lean burn engine. In some lean burn engines gaseous basic fuel is taken with the inlet air into the cylinder. The fuel may also be fed partly or entirely directly into the cylinder by separate injection valve means. For ignition or for improving the efficiency of the engine the basic mixture may, if necessary, be enriched by feeding additional fuel, either gas fuel or liquid fuel with better ignition properties, into the cylinder by injection valve means. Depending on the circumstances, an ignition may be obtained by a spark provided by separate ignition means, by means of self-ignition occurring at high pressure, or by utilizing for example a glow element located in the cylinder. The ignition may be provided, if necessary, in a pre-chamber of the cylinder. For providing an ignition and/or for controlling the exact timing thereof the fuel feed into the cylinder may take place by means of several valves. For such solutions reference is made for example to the publications US-A-5,060,610 and US-A-5,144,924.

In modern lean burn gas engines, a large excess amount of air (the so-called lambda-parameter) is utilized. In engines with a pre-chamber the lambda-parameter is usually 2 to 2.2 and in engines without a pre-chamber the lambda-parameter is in the order of 1.4 to 1.7. An advantage of a large excess amount of air is that the generation of nitrogen oxides (NOx) is lessened. A disadvantage is the lower speed of combustion, which on the one hand decreases the efficiency of the engine and, on the other hand, increases the amount of incombustible hydrocarbons exiting with the exhaust gases. The use of a large excess amount of air may result also in accidental misfiring, which further decreases the efficiency and increases the problem associated with the incombustible hydrocarbons.

In order to minimise these disadvantages, turbulence may be generated into the gas mixture in the combustion chamber, whereby a movement in the radial direction and rotational movement about the centre portion of the combustion chamber may be distinguished. The former may be generated through an effort to minimise the distance of the periphery of the upper surface of the piston from the cylinder head. The latter may be achieved so that the inlet air feed is arranged to occur tangentially with regard to the combustion chamber of the cylinder.

Installation of a separate ring-like piece in the cylinder of an engine is known as such e.g. from the patent publications DE-C-37 06 592, GB-A-689585 and FI-C-16413. By means of these known pieces it is possible to create some turbulence in the burning chamber. US-A-2,676,580 discloses further a separate piece to be installed in the burning chamber for the purpose of increasing the compression ratio of the engine. US-A-2,172,170 describes a cylinder head on which there is formed an annular flange or skirt projecting into the cylinder beyond the cylinder head.

An aim of the invention is to provide a new, constructionally advantageous arrangement for effectivating the burning process especially in gas engines functioning on lean burn principle. A further aim is to utilize and effectivate the aforementioned turbulence phenomenon in the combustion chamber of a cylinder and to provide a solution which has a less complicated and more secure construction than the known arrangements.

The aims of the invention can be accomplished by the arrangement described in claim 1 and in the subsidiary claims. According to the invention the structure element is at least substantially L-formed in an axial section of the cylinder so that it includes a first portion supported to the cylinder liner and extending, when the piston is at its top dead centre, in the axial direction of the cylinder over the upper mantle surface of the piston guided by the cylinder liner, and a second portion extending in the radial direction of the cylinder towards the centre portion of the combustion chamber partly above the surface of the upper end of the piston. In this way, an effective movement of the gas mixture in the radial direction can be accomplished in a simple manner in the combustion chamber of the cylinder. At the same time as the diameter of the combustion chamber is essentially decreased, the temperature of its edge parts is increased, which increases the reaction speed, and hence the burning speed. Because a separate structure element having a shape in accordance with the invention is utilised, a reliable and compact construction is obtained in combination with effective guidance for the gas mixture. The construction makes it further possible to utilise an uncomplicated form for the cylinder head at the position of the cylinder liner and the combustion chamber, which is of advantage also from the view point of manufacturing costs.

The first portion of the structure element extending in the axial direction of the cylinder can with advantage be arranged to extend at the position of the upper portion of the piston radially towards the centre portion of the cylinder, whereby a mantle surface of the upper part of the piston is correspondingly provided with a step corresponding to the first portion of the structure element. In this arrangement the piston can with advantage be provided with a number of passages, which connect the above mentioned step portion of the piston to the upper surface of the piston. These passages can be arranged to open at an inclined angle to an edge area of the combustion chamber so that when the piston approaches its top dead centre the gas mixture flow through them causes a flow of the gas mixture in the combustion chamber around the centre portion of the combustion chamber, which further increases the efficiency of the turbulence phenomenon and, hence, the technical effect of the invention.

The structure element may extend in the radial direction of the cylinder at least partly to the spaces between the valves of the cylinder, which further decreases the diameter of the combustion chamber and accelerates the burning.

The structure element can at least partly be thermally insulated with regard to the cylinder liner and/or the cylinder head, which, correspondingly, increases the temperature of the walls of the combustion chamber and thus further accelerates the burning.

The structure element is manufactured advantageously of a ceramic material, whereby it withstands better high temperatures.

The invention will be described in the following by way of example, with reference to the attached drawings, wherein:
Figure 1 is a cross-section in the axial direction of an engine cylinder incorporating an embodiment of the invention;
Figure 2 is a cross-section in the axial direction of an engine cylinder incorporating a second embodiment of the invention;
Figure 3 is a section along line III-III of Figure 2;
Figure 4 is a cross-section in the axial direction of an engine cylinder incorporating a third embodiment of the invention; and
Figure 5 is a section along line V-V of Figure 4.

In the drawings, reference numeral 1 indicates a cylinder head of a combustion engine, 2 a cylinder liner and 3 a piston movable reciprocatingly in a cylinder of an engine. Between the cylinder head 1 and the upper surface of the piston 3 there is a combustion chamber 4, into which fuel is injected through valve means 5.

In accordance with the invention a ring-shaped structure element 6 is arranged between the cylinder liner 2 and the cylinder head 1 encircling the combustion chamber 4 and extending in the radial direction (portion 6b) over the edge of the piston 3 towards the centre area of the combustion chamber 4 and, as a consequence, restricting the combustion chamber 4 at its edge area. An edge portion 3a of the upper surface of the piston is shaped to correspond to the lower surface of the structure element 6.

The function of the structure element 6 is based on the fact that when the piston 3 approaches its top dead centre shown in the figures the edge portion 3a of the upper surface of the piston forces the gas mixture remaining between it and the structure element 6 towards the centre area of the combustion chamber 4 as shown by arrow 9. This flow causes turbulence in the gas mixture in the combustion chamber 4, which effectivates the burning process. At the same time as the diameter of the combustion chamber 4 is reduced by the structure element 6, the temperature in the walls thereof is increased. As a consequence the burning process is accelerated and becomes more effective.

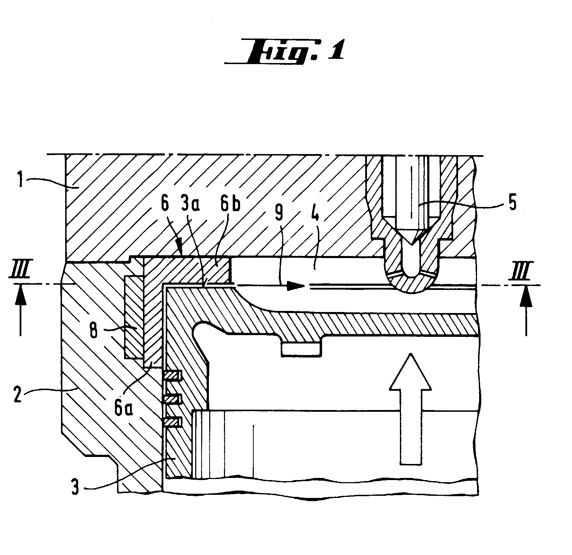

In the embodiment of Figure 1 the structure element 6 is fixed, for example by a press fit or shrinkage fit to the cylinder liner 2. In practice a small clearance may then remain between the structure element 6 and the edge portion 3a of the piston.

The structure element 6 includes a portion 6a supported to the cylinder liner 2 and extending in the axial direction of the cylinder beyond the upper surface of the piston 3 when the piston 3 is at its top dead centre. In addition, the portion 6a can be thermally insulated from the cylinder liner 2 by means of an element 8 suitable for the purpose. Hereby the temperature of the said edge of the combustion chamber 4 can be further increased for making the burning more effective. In a corresponding way, when needed, it is possible to provide thermal insulation also between the structure element 6 and the cylinder head 1.

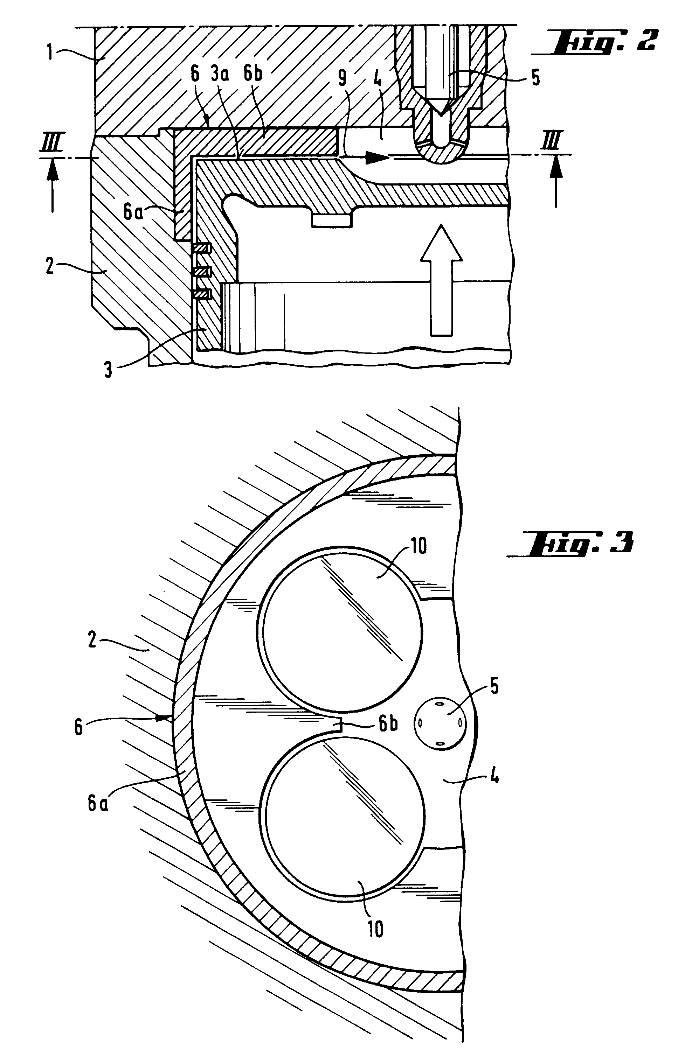

In the embodiment of Figures 2 and 3 the radially extending portion 6b of the structure element 6 is formed to extend at least partly also to the space between the valves 10 of the cylinder, thus reducing further the volume of combustion chamber 4 and effectivating the burning process.

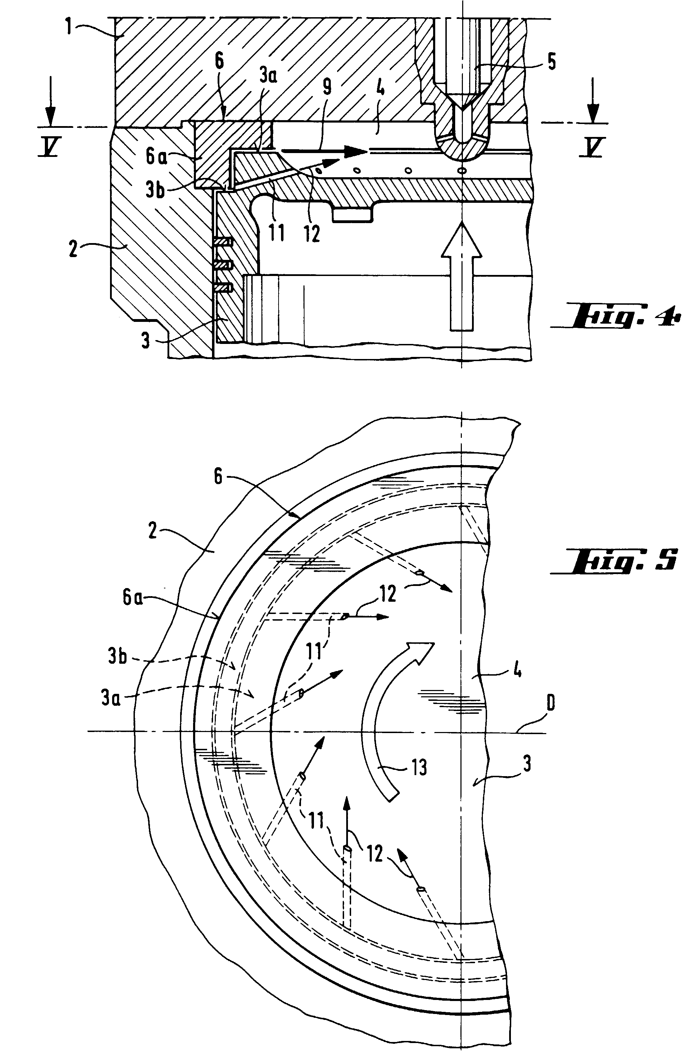

In the embodiment of Figures 4 and 5 the axial portion 6a of the structure element 6 is enlarged at the position of the upper portion of the piston 3 to extend radially towards the inner portion of the cylinder. Correspondingly, the upper portion of the mantle surface of the piston 3 includes a step 3b corresponding to the said portion 6a of the structure element. Additionally, the piston 3 includes a number of passages 11 connecting the step portion 3b of the piston to the upper surface of the piston 3.

As is apparent from Figure 5, the passages 11 are arranged to open at an inclined angle relative to the diameter D of the piston 3, as viewed in the cross sectional plane of the cylinder, these passages 11 each opening into the edge area of the combustion chamber 4 so that when the piston approaches its top dead centre the gas mixture flows 12 which are forced therethrough from the space between the structure element 6 and the step portion 3b cause a circular flow 13 of the gas mixture in the combustion chamber 4 around the centre portion of the combustion chamber 4. This increases the turbulence in the combustion chamber 4 further, and thus effectivates the burning process.

## Claims

1. An arrangement for effectivating the burning process in a reciprocating internal combustion engine having at least one cylinder, the arrangement including a separate structure element (6) installed in connection with a cylinder liner (2) at least partly between the cylinder liner (2) and a cylinder head (1), said structure element (6) being arranged to encircle in a ring-like manner a combustion chamber (4) of the cylinder for the purpose of causing a gaseous fuel mixture to be forced from the space between an upper end (3a) of the piston (3) and the structure element (6) towards the centre portion of the combustion chamber (4) when the piston (3) moves to its top dead centre, characterized in that the structure element (6) is at least substantially L-formed in any axial section of the cylinder so that it includes a first portion (6a) supported to the cylinder liner (2) and extending, when the piston is at its top dead centre, in the axial direction of the cylinder over the upper mantle surface of the piston (3) guided by the cylinder liner (2), and a second portion (6b) extending in the radial direction of the cylinder towards the centre portion of the combustion chamber (4) at least partly above the uppermost end surface (3a) of the piston (3), thereby radially restricting the combustion chamber (4) at its edge area at the top dead centre of the piston (3).

2. An arrangement according to claim 1, characterized in that the engine is a gas engine.

3. An arrangement according to claim 1 or claim 2, characterized in that the said first portion (6a) of the structure element (6) is arranged to extend at the position of the upper portion of the piston (3) radially towards the centre portion of the cylinder, that the upper mantle surface of the piston (3) includes a step (3b) corresponding to said first portion (6a) of the structure element (6), and that the piston (3) includes a number of passages (11) connecting the step portion (3b) of the piston to the upper surface of the piston (3).

4. An arrangement according to claim 3, characterized in that the said passages (11) are arranged to open at an inclined angle to an edge area of the combustion chamber (4) so that when the piston (3) approaches its top dead centre the resulting gas mixture flow (12) through said passages causes a flow (13) of the gas mixture in the combustion chamber (4) around the centre portion thereof.

5. An arrangement according to any of the preceding claims, characterized in that the second portion (6b) of the structure element (6) extends in the radial direction of the cylinder at least partly into at least one space between the valves (10) of the cylinder.

6. An arrangement according to any of the preceding claims, characterized in that the structure element (6) is at least partly thermally insulated with regard to the cylinder liner (2) and/or the cylinder head (1).

7. An arrangement according to any of the preceding claims, characterized in that the structure element (6) is of ceramic material.

## Patentansprüche

1. Vorrichtung zur Verbesserung des Verbrennungsvorganges in einer Hubkolbenbrennkraftmaschine, die mindestens einen Zylinder hat, und die Vorrichtung ein separates Profilelement(6) enthält, das in Verbindung mit einer Zylinderlaufbuchse (2) zumindest teilweise zwischen der Zylinderlaufbuchse (2) und einem Zylinderkopf (1) eingebaut ist, wobei dieses Profilelement (6) angeordnet ist, einen Brennraum (4) des Zylinders in einer ringartigen Weise zu umfassen, für den Zweck, eine gasförmige Mischung des Brennstoffs aus dem Raum zwischen einem oberen Ende (3a) des Kolbens (3) und dem Profilelement (6) in die Richtung des Zentrums des Brennraumes (4) zu drücken, wenn sich der Kolben (3) zu seinem oberen Totpunkt bewegt,
**dadurch gekennzeichnet,** daß das Profilelement (6) in jedem axialen Schnitt des Zylinders zumindest im wesentlichen L-förmig ist, so daß es einen ersten Anteil (6a) aufweist, der an der Zylinderlaufbuchse (2) getragen ist und sich in der axialen Richtung des Zylinders über die obere Manteloberfläche des Kolbens (3) erstreckt, die durch die Zylinderlaufbuchse (2) geführt wird, wenn der Kolben an seinem oberen Totpunkt ist, und einen zweiten Anteil (6b) aufweist, der sich in der radialen Richtung des Zylinders in Richtung des Zentrums des Brennraumes (4) zumindest teilweise über die oberste Endoberfäche (3a) des Kolbens (3) erstreckt, wodurch er den Brennraum (4) in seinem Randbereich an dem oberen Totpunkt des Kolbens (3) einschränkt.

2. Vorrichtung gemäß Anspruch 1,
**dadurch gekennzeichnet,** daß die Maschine eine Gasmaschine ist.

3. Vorrichtung gemäß Anspruch 1 oder Anspruch 2,
**dadurch gekennzeichnet,** daß der besagte erste Anteil (6a) des Profilelementes (6) angeordnet ist, sich an der Stelle des oberen Anteiles des Kolbens (3) radial in Richtung des Zentrums des Zylinders zu erstrecken, daß die obere Manteloberfläche des Kolbens (3) entsprechend dem besagten ersten Anteil (6a) des Profilelementes (6) eine Stufe (3b) enthält, und daß der Kolben (3) eine Anzahl von Durchgängen (11) enthält, die den Stufenanteil (3b) des Kolbens mit der oberen Oberfläche des Kolbens (3) verbinden.

4. Vorrichtung gemäß Anspruch 3,
**dadurch gekennzeichnet,** daß die besagten Durchgänge (11) angeordnet sind, in einem schiefen Winkel in den Randbereich des Brennraumes (4) zu öffnen, so daß bei Annäherung des Kolbens (3) an seinen oberen Totpunkt der resultierende Gasgemischstrom (12) durch diese Durchgänge einen Strom des Gasgemisches in dem Brennraum (4) um dessen Zentrum erzeugt.

5. Vorrichtung gemäß einem der vorangehenden Ansprüche,
**dadurch gekennzeichnet,** daß sich der zweite Anteil (6b) des Profilelementes (6) in der radialen Richtung des Zylinders zumindest teilweise in mindestens einen Raum zwischen den Ventilen (10) des Zylinders erstreckt.

6. Vorrichtung gemäß einem der vorangehenden Ansprüche,
**dadurch gekennzeichnet,** daß das Profilelement (6) zumindest teilweise thermisch gegen die Zylinderlaufbuchse (2) und/oder den Zylinderkopf (1) isoliert ist.

7. Vorrichtung gemäß einem der vorangehenden Ansprüche,
**dadurch gekennzeichnet,** daß das Profilelement (6) aus einem keramischen Material ist.

## Revendications

1. Agencement destiné à renforcer l'efficacité du processus de combustion dans un moteur à combustion interne à piston alternatif comportant au moins un cylindre, l'agencement comprenant un élément de structure séparé (6) installé en liaison avec une chemise de cylindre (2) au moins en partie entre la chemise de cylindre (2) et une culasse (1), ledit élément de structure (6) étant agencé de façon à entourer en formant un anneau une chambre de combustion (4) du cylindre dans le but d'amener un mélange de carburant gazeux à être forcé depuis l'espace entre une extrémité supérieure (3a) du piston (3) et l'élément de structure (6) vers la partie centrale de la chambre de combustion (4) lorsque le piston (3) se déplace vers son point mort haut, caractérisé en ce que l'élément de structure (6) est au moins pratiquement en forme de L suivant une coupe axiale quelconque du cylindre de sorte qu'il comprend une première partie (6a) supportée par la chemise de cylindre (2) et s'étendant, lorsque le piston se trouve à son point mort haut, dans la direction axiale du cylindre au-dessus de la surface de paroi supérieure du piston (3) guidé par la chemise du cylindre (2), et une seconde partie (6b) s'étendant dans la direction radiale du cylindre vers la partie centrale de la chambre de combustion (4) au moins en partie au-dessus de la surface d'extrémité la plus haute (3a) du piston (3), en limitant ainsi radialement la chambre de combustion (4) au niveau de sa région de bord au niveau de la position de point mort haut du piston (3).

2. Agencement selon la revendication 1, caractérisé en ce que le moteur est un moteur à gaz.

3. Agencement selon la revendication 1 ou la revendication 2, caractérisé en ce que ladite première partie (6a) de l'élément de structure (6) est agencée de façon à s'étendre à l'emplacement de la partie supérieure du piston (3) radialement vers la partie centrale du cylindre, en ce que la surface de paroi supérieure du piston (3) comprend un épaulement (3b) correspondant à ladite première partie (6a) de l'élément de structure (6), et en ce que le piston (3) comprend un certain nombre de passages (11) reliant la partie d'épaulement (3b) du piston à la surface supérieure du piston (3).

4. Agencement selon la revendication 3, caractérisé en ce que lesdits passages (11) sont agencés de façon à déboucher suivant un angle incliné sur une région de bord de la chambre de combustion (4) de sorte que, lorsque le piston (3) se rapproche de sa position de point mort haut, l'écoulement de mélange gazeux résultant (12) par l'intermédiaire desdits passages provoque un écoulement (13) du mélange gazeux dans la chambre de combustion (4) autour de la partie centrale de celle-ci.

5. Agencement selon l'une quelconque des revendications précédentes, caractérisé en ce que la seconde partie (6b) de l'élément de structure (6) s'étend dans la direction radiale du cylindre au moins en partie jusque dans au moins un espace entre les soupapes (10) du cylindre.

6. Agencement selon l'une quelconque des revendications précédentes, caractérisé en ce que l'élément de structure (6) est au moins en partie isolé thermiquement par rapport à la chemise de cylindre (2) et/ou la culasse (1).

7. Agencement selon l'une quelconque des revendications précédentes, caractérisé en ce que l'élément de structure (6) est fait d'un matériau de céramique.
